# EUROPÄISCHE PATENTSCHRIFT

(11) **EP 0 622 738 B1**
(45) Veröffentlichungstag und Bekanntmachung des Hinweises auf die Patenterteilung: **05.08.1998**
(21) Anmeldenummer: 93107093.2
(22) Anmeldetag: 30.04.1993
(51) Int. Cl.: G06F 12/08

(54) **Verfahren zur Ausführung von an einen mehrstufigen Cachespeicher einer Datenverarbeitungsanlage gerichteten Anforderungen und entsprechend gestalteter Cachespeicher**
Method for carrying out requests to a multilevel cache memory in a data processing system and cache memory configurated accordingly
Procédé pour effectuer des demandes à une antémémoire à niveaux multiples d'un système de traitement de données et antémémoire ainsi configurée

(43) Veröffentlichungstag der Anmeldung: 02.11.1994
(73) Patentinhaber: Siemens Nixdorf Informationssysteme Aktiengesellschaft, 33102 Paderborn (DE)
(72) Erfinder: Kock, Ernst Josef, Dr. rer. nat., W-8091 Kirchseeon (DE)
(74) Vertreter: Epping, Wilhelm, Dr.-Ing.

(56) Entgegenhaltungen:
- EP-A- 0 243 724
- EP-A- 0 461 926

## Beschreibung

Die Erfindung betrifft ein Verfahren zur Ausführung von an einen mehrstufigen Cachespeicher einer Datenverarbeitungsanlage gerichteten Anforderungen entsprechend dem Oberbegriff des Patentanspruches 1 und einen entsprechend diesem Verfahren gestalteten mehrstufigen Cachespeicher.

Mehrstufige Cachespeicher sind allgemein bekannt - man siehe z.B. EP 0 481 233-A2. Sie dienen dazu, die Leistungsfähigkeit eines zugehörigen Verarbeitungsprozesses zu steigern, weil ein in der niedrigsten oder ersten Stufe fehlgeschlagener Speicherzugriff nicht zwangsläufig zur Weiterleitung an den übergeordneten Hauptspeicher der Datenverarbeitungsanlage führt, sondern in vielen Fällen lediglich einen Zugriff auf die vergleichsweise schnellere, nächsthöhere oder zweite Stufe bedingt.

Um auch bei mehrstufigen Cachespeichern eine eindeutige Identifizierung des jeweils gewünschten Datenblockes zu gewährleisten, sind die in der Zugriffsadresse einer Stufe nicht berücksichtigten Adressenbits der zugehörigen Hauptspeicheradresse als TAG-Einträge vorzusehen, was in allen Stufen erhebliche Speicherkapazität bindet.

Zum anderen muß in Multiprozessorsystemen mit den einzelnen Verarbeitungsprozessoren individuell zugeordneten privaten Cachespeichern sichergestellt werden, daß auf Grund externer Anforderungen durch andere Einheiten vorzunehmende Aktualisierungen in allen Stufen durchgeführt werden Dies führt insbesondere dann zu Schwierigkeiten, wenn die Datenblockgrößen - zu den niedrigen Stufen hin kleiner werdend - für einzelne Stufen unterschiedlich groß und zum Teil kleiner als die von einer Aktualisierungsanforderung betroffene Blockgröße sind. Das Aktualisieren würde dann entweder mehrere Aktualisierungszyklen zur Ansteuerung der betroffenen kleineren Blöcke in Folge oder aber zusätzlichen Hardwareaufwand für das gleichzeitige Ansteuern aller betroffenen kleineren Blöcke erfordern.

Aufgabe der Erfindung ist es daher, das Verfahren zur Ausführung von an einen mehrstufigen Cachespeicher gerichteten Anforderungen und den Cachespeicher selbst so zu gestalten, daß die genannten Probleme mit geringerem Aufwand an Hardware und Zeit gelöst werden.

Bezüglich des Verfahrens wird dies entsprechend den kennzeichnenden Merkmalen des Patentanspruches 1 erreicht. Ausgangspunkt ist dabei der Grundgedanke, daß in einer Stufe x nur dann ein Treffer angezeigt werden darf, wenn auf jeder höheren Stufe auch für den Block, der den auf der Stufe x angesprochenen Teilblock enthält, ein Treffer angezeigt wird. Damit eröffnet sich einerseits die Möglichkeit, durch Verknüpfung der Treffersignale von Stufe zu Stufe, ausgehend von der jeweils höchsten Stufe, mit der Überprüfung in der jeweils nächst niedrigeren Stufe, die TAG-Einträge von Stufe zu Stufe zu verkleinern und auf eine Kennzeichnung der Trefferbank aus der nächst höheren Stufe zu beschränken, da die vom dortigen TAG-Eintrag erfaßten Adressenbits der Hauptspeicheradresse nicht wiederholt zu werden brauchen.

Bei unmittelbar an die unterste Stufe gerichteten Speicherzugriffsanforderungen braucht daher durch gleichzeitige Ansteuerung aller Stufen abhängig von der der Speicherzugriffsanforderung zugrundeliegenden Hauptspeicheradresse nur geprüft zu werden, ob der gewünschte Datenblock in allen Stufen vorhanden und gültig ist, um ein Treffersignal für den Zugriff zur niedrigsten Stufe zu erzeugen.

Umgekehrt ermöglicht die Verknüfung der Treffersignale aller Stufen, daß allein durch Ungültigerklären eines Blockes in der höchsten Stufe ein Zugriff auf einen von diesem Block erfaßten und gegebenenfalls einen kleineren Block bildenden Dateneintrag in der niedrigsten Stufe verhindert wird, obwohl dieser noch nicht für ungültig erklärt worden ist.

Weiterbildungen dieses Verfahrens entsprechend den Patentansprüchen 2 bis 4 beziehen sich auf die Anpassung der verkürzten TAG-Einträge, abhängig von der Organisation der Speicher in den einzelnen Stufen hinsichtlich Adressierung durch Teiladressen, Blockgröße und Bankspeicherkapazitat, wobei gegebenenfalls einzelne Adressenbits in den niedrigeren Stufen zusatzlich zu der jeweiligen Bankkennung als TAG-Bestandteil verwendet werden können.

Die entsprechende Gestaltung mehrstufiger Cachespeicher ergibt sich aus den Merkmalen des Patentanspruches 5. Danach sind ausgehend von den als TAG-Einträge benutzten Kennzeichnungen der den zugehörigen Datenblock enthaltenden Bank der nächsthöheren Stufe die Ergebnisleitungen der Uberwachungsschaltungen der Bänke einer Stufe jeweils parallel mit den Uberwachungsschaltungen der einzelnen Bänke in der jeweils niedrigeren Stufe verbunden und liefern so das sonst von den Adressenbits der Speicheradresse abgeleitete Vergleichsdatum für den zu prüfenen TAG-Eintrag, wobei die Ergebnisverknüpfung von Stufe zu Stufe bis zur niedrigstens Stufe weitergereicht wird. Analoges gilt für die Verwendung einzelner Adressenbits als zusätzlicher Bestandteil der TAG-Einträge gemäß Patentanpruch 6.

Einzelheiten der Erfindung seien nachfolgend anhand von in der Zeichnung dargestellten Ausführungsbeispielen näher erläutert.

Im einzelnen zeigen
Figur 1 das Blockschaltbild eines mehrstufigen Cachespeichers mit gleicher Bankspeicherkapazität aber unterschiedlichen Blockgrößen in den einzelnen Stufen,
Figur 2 das Blockschaltbild eines mehrstufigen Cachespeichers mit unterschiedlicher Bankspeicherkapazität und unterschiedlichen Blockgrößen in den einzelnen Stufen,
Figur 3 die Überwachungsschaltung für eine der Bänke in der zweiten Stufe des Cachespeichers und
Figur 4 die Uberwachungsschaltung für eine der Bänke in der ersten Stufe des Cachespeichers.

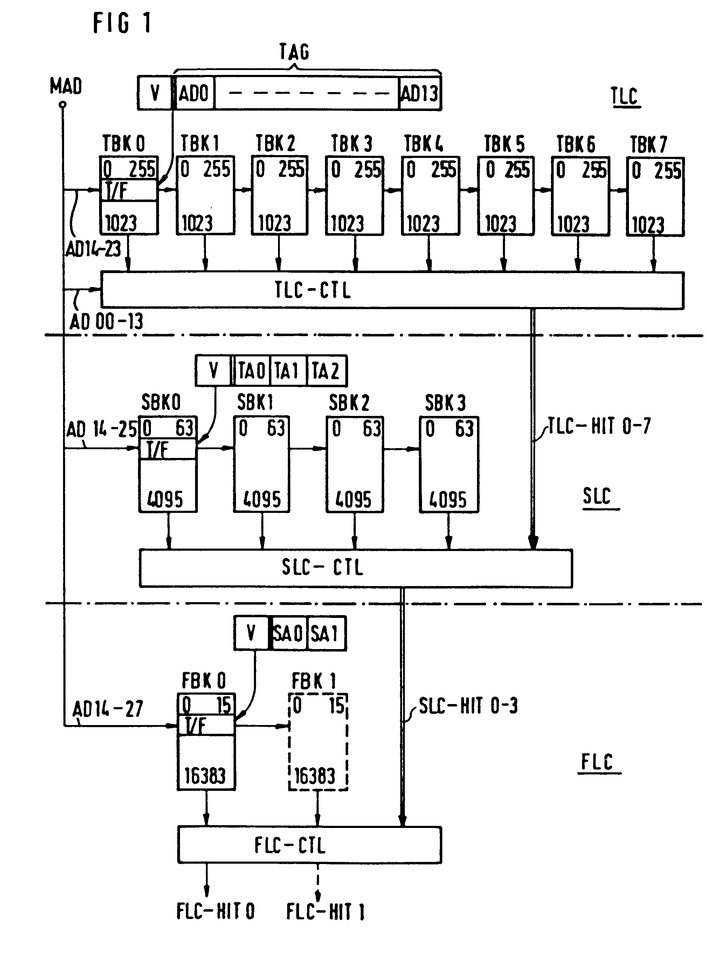

Das Blockschaltbild von Figur 1 zeigt die Struktur eines dreistufigen Cachespeichers mit den Speicherstufen TLC, SLC und FLC. Jede Stufe ist in mehrere Bänke unterteilt, z.B TBK0 bis TBK7 in der Stufe TLC, SBK0 bis SKB3 in der Stufe SLC und FBK0, FBK 1 in der Stufe FLC Die Darstellung ist dabei auf die der Speicherteile für die Kotrolleinträge T/F in den einzelnen Banken beschränkt. Nicht gezeigt sind die zugehörigen Datenspeicher mit den parallel adressierbaren Datenblöcken Um daher für die nachfolgende Betrachtung einen Anhaltspunkt zu haben, sind im Kopf der einzelnen Bänke jeweils die Blockgrößen in den zugehörigen Datenspeichern angegeben.

Demzufolge ist die Bankspeicherkapazität für die Bänke aller drei Stufen gleich groß, jedoch sind die Blockgrößen unterschiedlich. Die einzeln adressierbaren Blöcke werden bei den Banken TBK.. der dritten Stufe TLC von jeweils 256 Bytes, bei den Bänken SBK... der zweiten Stufe SLC von jeweils 64 Bytes und bei den Bänken FBK... der ersten Stufe FLC von jeweils 16 Bytes gebildet. Im gleichen Verhältnis vergrößert sich die Speichertiefe der Bänke von Stufe zu Stufe, nämlich von 1024 Einträgen in der Stufe TLC auf 4096 Einträge in der Stufe SLC und schließlich auf 16384 Einträge in der untersten Stufe FLC.

Die Adressierung der einzelnen Einträge in den einzelnen Stufen erfolgt ausgehend von den üblichen auf Byteebene ausgerichteten 32-Bit-Hauptspeicheradressen MAD mit den Adressenbits AD14-23 als Teiladresse für die Stufe TLC, mit den Adressenbits AD14-25 als Teiladressen für die Stufe SLC und mit den Adressenbits AD14-27 als Teiladressen in der Stufe FLC, während die freibleibenden Adressenbits AD0-13 in üblicherweise den TAG-Bestandteil der Kontrolleinträge T/F für die Datenblöcke in der höchsten Stufe TLC bilden. Abweichend davon werden gemäß der Erfindung für die Kontrolleinträge T/F in den beiden niedrigeren Stufen SLC und FLC keine Adressenbits benötigt, sondern es werden die Banknummern der Bänke der jeweils nächst höheren Stufe verwendet, was bei binärer Darstellung drei Bits TA0 bis TA2 für die Unterscheidung der acht Bänke in der höchsten Stufe TLC und zwei Bits SA0 und SAI für die Unterscheidung der vier Bänke in der zweiten Stufe SLC erfordert. Zusätzlich wird für die Überprüfung in allen Stufen das zugehörige Gültigkeitsbit benötigt.

In üblicher Weise ist in jeder Stufe für jede Bank eine Überwachungsschaltung vorgesehen, die in den einzelnen Stufen unter der gemeinsamen Bezeichnung TLC-CTL bzw. SLC-CTL bzw FLC-CTL zusammengefaßt sind.

Den Überwachungsschaltungen der höchsten Stufe TLC werden jeweils in bekannter Weise die freien Adressenbits AD00-13 der Hauptspeicheradresse MAD als Vergleichsdatum für den jeweils gelesenen TAG-Eintrag zugeführt. Demgegenüber verwenden die Uberwachungsschaltungen in den übrigen beiden Stufen SLC und FLC lediglich die Ergebnissignale TLC-HIT0-7 bzw. SLC-HIT0-3 der Bänke der jeweils nächst höheren Stufe als Vergleichsdatum für die Überprüfung der jeweils gelesenen Kontrolleinträge T/F.

Ein durch die Adressenbits AD00 bis AD23 der Hauptspeicheradressen MAD bestimmter und in einer der Bänke TBK0 bis TBK7 gespeicherter Datenblock von insgesamt 256 Bytes umfaßt jeweils vier Teilblöcke von je 64Bytes, die in der zweiten Stufe SLC in Verbindung mit den zusätzlichen Adressenbits AD24 und AD25 identifizierbar sind und gezielt angesteuert werden können. Analoges gilt für den Übergang von der Stufe SLC auf die Stufe FLC bezüglich der weiteren Adressenbits AD26 und AD27 bei 16-Byte-Blöcken im Gegensatz zu den 64-Byte-Blöcken in der Stufe SLC. Wird daher bei der Übertragung eines Teilblockes in eine der Bänke der Stufen SLC aus einem Block in der Stufe TLC die zugehörige Bankkennzeichnung aus der Stufe TLC als zugehöriger TAG-Eintrag für die Stufe SLC übernommen, dann ist dieser Teilblock anhand der Ergebnissignale TLC-HIT0-7 der Stufe TLC eindeutig als zugleich auch in der Stufe TLC gespeichert identifizierbar. Analoges gilt für die Beziehung zwischen den beiden Stufen SLC und FLC, so daß ein von der ersten Stufe FLC geliefertes Treffersignal FLC-HIT0 oder 1 nur möglich ist, wenn der gewünschte Speicherblock von 16 Byte in allen drei Stufen des Cachespeichers gespeichert ist.

Umgekehrt verhindert das Ungültigerklären eines in der höchsten Stufe TLC eingetragenen Blockes, z.B. durch Rücksetzen des zugehörigen Gültigkeitsbits V, daß danach in keiner der niedrigeren Stufen noch ein Treffersignal für in dem betroffenen Block enthaltene Adressbereiche abgegeben werden kann. Aktualisierungsanforderungen sind daher in einem Zyklus, wie bei einem einstufigen Cachespeicher, ausführbar.

Das Zurücksetzen der Gültigkeitsbits für die vom Adreßbereich des für ungültig erklärten Datenblockes in der höchsten Stufe erfaßten Teilblöcke in den niedrigeren Stufen erfordert dagegen keinen zusätzlichen Steuerungsaufwand und Zeitverlust, da ein Rücksetzen immer erfolgen muß, wenn ein Cacheeintrag in der obersten Stufe wegen eines Fehlzugriffes neu vorgenommen werden muß. Nur kann in diesem Falle das Rücksetzen während der Wartezeit, die durch die Übertragung der neuen Daten aus dem Hauptspeicher entsteht, ohne Leistungsverlust erfolgen.

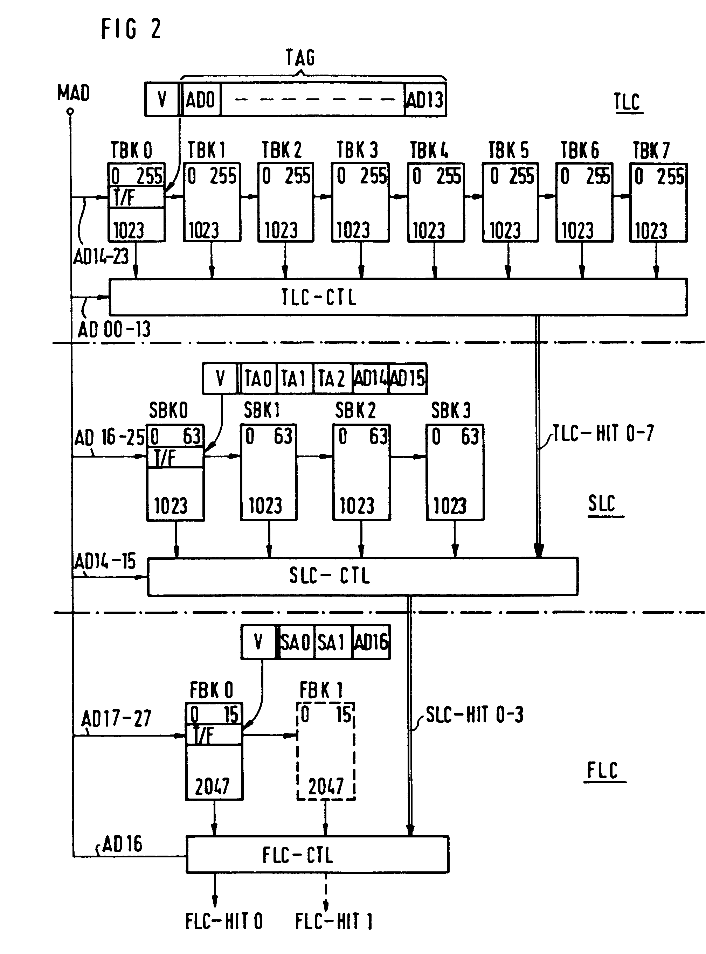

Das Blockschaltbild von Figur 2 zeigt in Anlehnung an das von Figur 1 die Struktur eines weiteren dreisteifufigen Cachespeichers, der sich von dem gemäß Figur 1 dadurch unterscheidet, daß die Bankspeicherkapazität nicht in allen Stufen gleich groß ist, sondern ausgehend von der obersten Stufe TLC von Stufe zu Stufe kleiner wird. Im Vergleich zum Cachespeicher von Figur 1 ist die oberste Stufe TLC gleichartig ausgebildet, nämlich bestehend aus acht Banken TBK0 bis TBK7 mit einer Speichertiefe von 1024 Einträgen mit jeweils 256 Bytes. In den anderen beiden Stufen SLC und FLC ist dagegen die Speichertiefe der Bänke bei sonst gleicher Stuktur hinsichtlich der Anzahl der Bänke SBK... bzw. FBK... und hinsichtlich der Blockgröße gegenüber Figur 1 verringert. So ist z.B. die Speichertiefe für die Banke SBK.. mit 1024 Einträgen genauso groß wie die der Bänke TBK... der Stufe TFC und die Speichertiefe für die Bänke FBK... umfaßt nur 2048 Einträge. Die Bankspeicherkapazität ist daher in der Stufe SLC auf ein Viertel gegenüber der von Stufe TLC und in der Stufe FLC auf die Hälfte gegenüber der von Stufe SLC verringert. Demzufolge werden für die Bildung der Teiladressen zur Ansteuerung in diesen Stufen weniger Adressenbits des Hauptspeicheradresse benötigt, nämlich 10 Adressenbits oberhalb der 64-Byte-Blockgrenze entsprechend den Adressenbits AD16-25 in der Stufe SLC und 11 Adressenbits oberhalb der 16-Byte-Blockgrenze entsprechend den Adressenbits AD17-27 in der Stufe FLC.

Da in der obersten Stufe TLC nur die Adressenbits AD00-13 für den TAG-Eintrag verwendet werden, und die Teiladressen für die Stufe SLC erst mit dem Adressenbit AD16 beginnen, würden die Adressenbits AD14-15 nicht in die TAG-Kontrolle einbezogen. Um dadurch gegebene Mehrdeutigkeiten in der Zuordnung der Datenblöcke auszuschließen, müssen diese freien Adressenbits zusätzlich zur Bankkennzeichnung im Kontrolleintrag T/F als TAG-Eintrag verwendet und in die Überprüfung durch die Überwachungsschaltungen mit einbezogen werden. Analoges gilt für die Stufe FLC bezüglich des Adressenbits AD16, d.h. alle in den über einer Stufe liegenden Stufen nicht in den TAG-Einträgen berücksichtigten und gegenüber dem Anfangsadressenbit der Teiladressen liegenden höherwertigen Adressenbits sind jeweils als zusätzliche TAG-Einträge zu berücksichtigen.

Aus der Gegenüberstellung der Zahlen für die Blockgrößen und die Speichertiefe der Bänke in den einzelnen Stufen ist ersichtlich, daß bei gleich großen Bankspeicherkapazitäten aller Bänke entsprechend Figur 1 eine Verkleinerung der Blockgrößen zu einer entsprechenden Verlängerung der jeweiligen Teiladressen führt, z.B. beim Blockgrößenverhältnis 4:1 um zwei Adressenbits entsprechend einer Vergrößerung der Speichertiefe um den Faktor 4. Umgekehrt führt eine demgegenüber verringerte Speichertiefe der Bänke und damit eine Änderung der Bankspeicherkapazität zu einer Verkürzung der benötigten Teiladressen, die den Einfluß der Blockverkleinerung teilweise oder auch ganz kompensieren kann, wie Figur 2 im Vergleich zu Figur 1 für die Stufen SLC und FLC erkennen läßt. Infolgedessen kann sich das Anfangsadressenbit für die Bildung der Teiladressen in den einzelnen Stufen verschieben. so daß einzelne Adressenbits der Hauptspeicheradresse MAD für die Bildung der Teiladressen nicht benötigt werden.

In Kenntnis dieser Zusammenhänge können die Cachespeicher unter den verschiedensten Aspekten strukturiert werden In jedem Falle können bis auf die oberste Stufe TLC die benötigten Kontrolleintrage T/F in den übrigen Stufen erheblich verkürzt werden.

Erwähnt sei noch, daß bei der Darstellung der Kontrolleinträge T/F in Figur 1 und Figur 2 lediglich die für das Verständnis der Erfindung notwendigen Bestandteile gezeigt sind, nicht aber die üblicherweise weiterhin benötigten Kontroll- und Sicherungsbits.

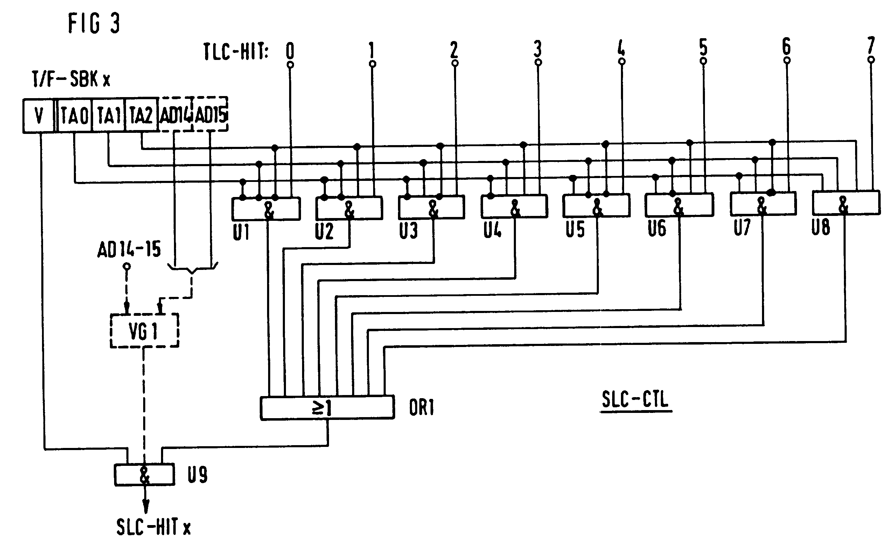

Figur 3 zeigt die Überwachungsschaltung für eine Bank SBKx der Stufe SLC des Cachespeichers von Figur 1, wobei der gestrichelte Teil die für das Ausführungsbeispiel gemäß Figur 2 notwendige Ergänzung wiedergibt. Entsprechend den von der übergeordneten Stufe TLC gelieferten Ergebnissignale TLC-HITO-7 sind acht UND-Glieder U1 bis U8 vorgesehen, die in der Art einer Vergleichseinrichtung prüfen, ob die im gelesenen Kontrolleintrag T/F enthaltene Bankkennzeichnung mit den Bits TA0 bis TA2 die Bank der Stufe TLC kennzeichnet, die ein Treffersignal als Ergebnissignal TLC-HIT... liefert. Das den UND-Gliedern nachgeschaltete ODER-Glied ORI bündelt die Einzelergebnisse des Vergleichs zu einem Steuersignal, das durch das nachfolgende UND-Glied U9 noch mit dem Gültigkeitsbit V im Kontrolleintrag zum Ergebnissignal SLC-HITx für die Bank SBKx verknüpft wird. Ist das Gültigkeitsbit V gesetzt und meldet eines der UND-Glieder Ul bis U8 einen Treffer, dann liefert das UND-Glied U9 ebenfalls als Ergebnissignal einen Treffer.

Sind gemäß dem Ausführungsbeispiel von Figur 2 zusätzliche Adressenbits in die Überprüfung einzubeziehen, im vorliegenden Fall die Adressenbits AD14-15, dann ist eine weitere Vergleichseinrichtung VGI erforderlich, um die im Kontrolleintrag T/F enthaltenen Adressenbits mit den entsprechenden der Hauptspeicheradresse MAD zu vergleichen. Das Ergebnissignal dieses Vergleichers wird dann gleichfalls dem UND-Glied U9 als weiteres Verknüpfungssignal zugeführt.

Bei vier Bänken SBK in der Stufe SLC umfaßt die gesamte Überwachungssteuerung SLC-CTL vier der in Figur 3 dargestellten Überwachungsschaltungen, nämlich für jede Bank SBK... eine.

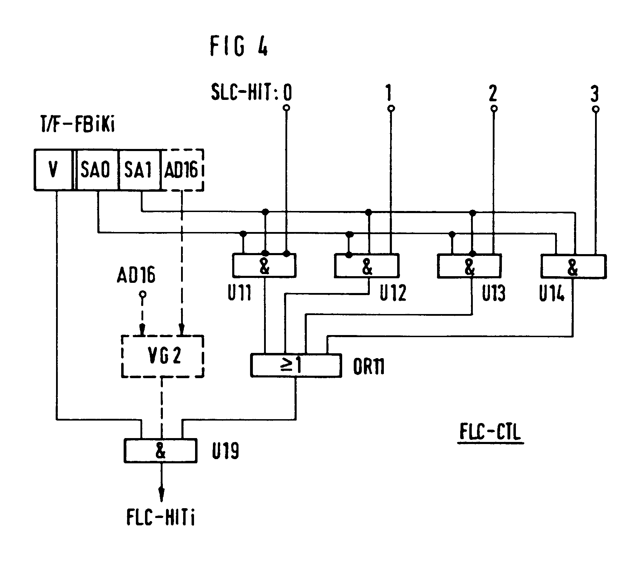

In gleicher Weise sind die Überwachungsschaltungen für die Bänke FBK... der niedrigsten Stufe FLC aufgebaut, wie Figur 4 zeigt.

## Patentansprüche

1. Verfahren zur Ausführung von an einen mehrstufigen Cachespeicher einer Datenverarbeitungsanlage gerichteten Anforderungen, wobei die Speicher in den einzelnen Stufen in Bänke unterteilt sind und die Datenblöcke in den einzelnen Stufen unterschiedlich groß sein können,
**dadurch gekennzeichnet,**
- daß abgesehen vom Speicher der höchsten Stufe (TLC) für die Kontrolleinträge (T/F) in den Speichern der nachfolgenden niedrigeren Stufen (SLC,FLC) jeweils eine Angabe (TA0 bis TA2 bzw. SA0 und SA1) über die den gewünschten Datenblock enthaltende Bank (TBK... bzw. SBK...) der jeweils höheren Stufe (TLC bzw. SLC) als TAG-Eintrag verwendet wird,
- daß bei einer unmittelbaren Speicheranforderung an den Cachespeicher die Speicher aller Stufen (FLC,SLC und TLC) gleichzeitig auf das Vorliegen des gewünschten Datenblockes überprüft werden und ein erfolgreicher Zugriffzur untersten Stufe (FLC) nur gegeben ist, wenn der gewünschte Datenblock in allen Stufen gleichzeitig vorhanden und gültig ist, und
- daß bei Aktualisierungsanforderungen für einen vorgegebenen Datenblock im Cachespeicher zunächst nur der Speicher der höchsten Stufe (TLC) angesteuert und der vorgegebene Datenblock oder der diesen als Teilmenge enthaltende Datenblock für ungültig erklärt wird

2. Verfahren nach Anspruch 1,
**dadurch gekennzeichnet,**
daß bei aus aufeinanderfolgenden Adressenbits (z.B. AD14-23 bzw. AD14-25) der Hauptspeicheradresse (MAD) gebildeten Teiladressen für die Ansteuerung der Speicher, die in wenigstens zwei aufeinanderfolgenden Stufen (z.B. TLC und SLC) jeweils mit demselben Adressenbit (AD14) beginnen, in der jeweils niedrigeren Stufe (SLC) nur die Angabe (TA0 bis TA2) über die den gewünschten Datenblock enthaltene Bank (TBKx) der jeweils höheren Stufe (TLC) als TAG-Eintrag verwendet wird.

3. Verfahren nach Anspruch 1,
**dadurch gekennzeichnet,**
daß bei aus aufeinanderfolgenden Adressenbits (z.B. AD14-23 bzw. AD16-25) der Hauptspeicheradresse (MAD) gebildeten Teiladressen für die Ansteuerung der Speicher, die in wenigstens zwei aufeinanderfolgenden Stufen (z.B. TLC und SLC) jeweils mit einem anderen Adressenbit (AD14 bzs. AD16) beginnen, wobei die Teiladressen für die jeweils niedrigere Stufe mit einem niedrigeren Adressenbit (AD16) beginnen, in der jeweils niedrigeren Stufe (SLC) neben den Angaben (TA0 bis TA2) über die den gewünschten Datenblock enthaltende Bank (TBKx) der jeweils höheren Stufe (TLC) zusätzlich auch die jeweils zwischen dem letzten als TAG-Eintrag in einer Stufe (z.B. TLC) berücksichtigten Adressenbit (z.B. AD13) und dem Anfangsadressenbit (z.B. AD16) der nächst niedrigeren Stufe (SLC) liegenden Adressenbits (AD14-15) der Hauptspeicheradresse (MAD) als TAG-Eintrag verwendet werden.

4. Verfahren nach Anspruch 3,
**dadurch gekennzeichnet,**
daß die Anzahl der Adressenbits (z.B. AD14-23 bzw. AD16-25) für die Teiladressen der Speicher aufeinanderfolgender Stufen, (z.B. TLC und SLC) jeweils vom Verhältnis der jeweiligen Blockgrößen und/oder der jeweiligen Bankspeicherkapazitäten zweier aufeinanderfolgender Stufen abhängig ist, wobei eine kleinere Datenblockgröße in der niedrigeren Stufe (SLC) zu einer Vergrößerung der Anzahl von Adressenbits führt, während eine Verkleinerung der Bankspeicherkapazität in der niedrigeren Stufe dazu entgegengesetzt wirkt.

5. Cachespeicher, der entsprechend dem Verfahren nach einem der Ansprüche 1 bis 4 arbeitet und in mehrere Stufen unterteilt ist, wobei die Speicher der einzelnen Stufen (z.B. TLC,SLC und FLC) in Banke (TBK..., SBK..., FBK...) unterteilt sind und jeder Bank eine Uberwachungsschaltung zugeordnet ist, die den TAG-Eintrag in einem jeden Dateneintrag zugeordneten Kontrolleintrag (T/F) beim Zugriff mit einem vorgegebenen Vergleichsdatum vergleicht und bei Übereinstimmung im Falle eines gültigen Dateneintrages ein Treffersignal als Ergebnissignal (z B TLC-HITx) abgibt,
**dadurch gekennzeichnet,**
- daß mit Ausnahme der hochsten Stufe (TCL) der TAG-Eintrag in den niedrigeren Stufen (SLC,FLC) von der Bankkennzahl der Bank der nachst höheren Stufe (z.B TLC bzw. SLC) ableitbar ist, die denselben Datenblock gespeichert enthält,
- daß ausgehend von der jeweils hochsten Stufe (TLC) die Ergebnisleitungen (TLC-HIT. . . bzw. SLC-HIT...) aller Uberwachungsschaltungen (TLC-CTL bzw. SLC-CTL) für die jeweiligen Banke (TBK... bzw. SBK...) einer Stufe (TLC bzw. SLC) jeweils parallel mit den Überwachungsschaltungen (SLC-CTL bzw. FLC-CTL) aller Bänke (SBK... bzw. FBK...) in der nachst niedrigeren Stufe (SLC bzw. FLC) verbunden sind und in jeder Überwachungsschaltung Vergleichseinrichtungen zum Vergleich der über die Ergebnisleitungen (TLC-HIT... bzw. SLC-HIT...) der jeweils höheren Stufe (TLC bzw. SLC) zugeführten Bankangabe (TA0 bis TA2 bzw. SA1, SA2) mit den Bankangaben der in der niedrigeren Stufe (SLC bzw FLC) gelesenen Kontrolleinträge (T/F) vorgesehen sind, so daß ein Treffersignal (FLC-HIT...) von den Überwachungsschaltungen (FLC-CTL) der niedrigsten Stufe (FLC) nur ausgelöst wird, wenn in jeder der höheren Stufen (TLC und SLC) eine Überwachungsschaltung ein Treffersignal (TLC-HIT..., SLC-HIT...) erzeugt hat.

6. Cachespeicher nach Anspruch 5,
**dadurch gekennzeichnet,**
- daß abhängig von der Bildung der Teiladressen (z.B. AD14-23 bzw. AD16-25 bzw. AD17-27) für die Speicher der einzelnen Stufen (TLC,SLC,FLC) in den TAG-Einträgen der vorhergehenden Stufen nicht berücksichtigte Adressenbits (z.B. AD14-15 bzw. AD16) der Hauptspeicheradresse (MAD) neben den Angaben (TA0 bis TA2 bzw. SA0, SA1) über die denselben Datenblock enthaltende Bank (TBK... bzw. SBK...) der jeweils höheren Stufe (TLC bzw. SLC) im Kontrolleintrag (T/F) als TAG-Eintrag vorgesehen sind,
- daß in den zugehörigen Überwachungsschaltungen (SLC-CTL,FLC-CTL) zusätzliche Vergleichseinrichtungen (VG1 bzw. VG2) zum Vergleich der von der Hauptspeicheradresse (MAD) jeweils abgeleiteten Adressenbits (AD14-15 bzw. AD16) mit den im Kontrolleintrag (T/F) enthaltenen Adressenbits vorgesehen sind und
- daß die Ergebnisleitungen beider Vergleichseinrichtungen mit einem logischen Verknüpfungsglied zur Erzeugung des endgültigen Ergebnissignales der jeweiligen Überwachungsschaltung verbunden sind.

## Claims

1. Method for executing requests directed to a multi-stage cache memory of a data processing system, wherein the memories in the individual stages are sub-divided into banks and the data blocks in the individual stages can be of different sizes, characterized in that
- apart from the memory of the highest stage (TLC), in each case information (TA0 to TA2 or, respectively, SA0 and SA1) on the bank (TBK... or, respectively, SBK...) of the higher stage in each case (TLC or, respectively, SLC) is used as TAG entry for the control entries (T/F) in the memories of the subsequent lower stages (SLC, FLC),
- in the case of a direct memory request to the cache memory, the memories of all stages (FLC, SLC and TLC) are simultaneously checked for the presence of the required data block and a successful access to the lowest stage (FLC) is only given if the required data block exists simultaneously in all stages and is valid, and
- in the case of updating requests for a predetermined data block in the cache memory, initially only the memory of the highest stage (TLC) is selected and the predetermined data block or the data block containing the latter as a subset is declared to be invalid.

2. Method according to Claim 1, characterized in that in the case of subaddresses formed from successive address bits (e.g. AD14-23 or, respectively, AD14-25) of the main memory address (MAD), for selecting the memories which in each case begin with the same address bit (AD14) in at least two successive stages (e.g. TLC and SLC), only the information (TA0 to TA2) on the bank (TBKx), containing the required data block, of the higher stage (TLC) in each case is used as TAG entry in the lower stage (SLC) in each case.

3. Method according to Claim 1, characterized in that in the case of subaddresses formed from successive address bits (e.g. AD14-23 or, respectively, AD16-25) of the main memory address (MAD) for selecting the memories which in each case begin with another address bit (AD14 or, respectively, AD16) in at least two successive stages (e.g. TLC and SLC), the subaddresses for the lower stage in each case beginning with a lower address bit (AD16), in addition to the information (TA0 to TA2) on the bank (TBKx), containing the required data block, of the higher stage (TLC) in each case, the address bits (AD14-15) of the main memory address (MAD), which are in each case located between the last address bit (e.g. AD13) taken into consideration as TAG entry in a stage (e.g. TLC) and the start address bit (e.g. AD16) of the next lower stage (SLC), are used as TAG entry in the lower stage (SLC) in each case.

4. Method according to Claim 3, characterized in that the number of address bits (e.g. AD14-23 or, respectively, AD16-25) for the subaddresses of the memories of successive stages (e.g. TLC and SLC) in each case depends on the ratio of the respective block sizes and/or of the respective bank memory capacities of two successive stages, a smaller data block size in the lower stage (SLC) leading to an increase in the number of address bits, whilst a reduction in the bank memory capacity in the lower stage has the opposite effect.

5. Cache memory which operates in accordance with the method according to one of Claims 1 to 4 and is subdivided into a number of stages, the memories of the individual stages (e.g. TLC, SLC and FLC) being subdivided into banks (TBK..., SBK..., FBK...) and each bank being allocated a monitoring circuit which, in the case of an access, compares the TAG entry in a control entry (T/F) allocated to each data entry with a predetermined reference data item and, if they correspond in the case of a valid data entry, outputs a hit signal as result signal (e.g. TLC-HITx), characterized in that
- with the exception of the highest stage (TLC), the TAG entry in the lower stages (SLC, FLC) can be derived from the bank identification number of the bank of the next higher stage (e.g. TLC or, respectively, SLC) in which the same data block is stored,
- starting from the highest stage (TLC) in each case, the result lines (TLC-HIT... or, respectively, SLC-HIT...) of all monitoring circuits (TLC-CTL or, respectively, SLC-CTL) for the respective banks (TBK... or, respectively, SBK...) of a stage (TLC or, respectively, SLC) are in each case connected in parallel to the monitoring circuits (SLC-CTL or, respectively, FLC-CTL) of all banks (SBK... or, respectively, FBK...) in the next lower stage (SLC or, respectively, FLC) and in each monitoring circuit, comparison devices for comparing the bank information (TA0 to TA2 or, respectively, SA1, SA2) supplied via the result lines (TLC-HIT... or, respectively, SLC-HIT...) of the higher stage (TLC or, respectively, SLC) in each case with the bank information of the control entries (T/F) read in the lower stage (SLC or, respectively, FLC) are provided so that a hit signal (FLC-HIT...) is only triggered by the monitoring circuits (FLC-CTL) of the lowest stage (FLC) if a monitoring circuit has generated a hit signal (TLC-HIT..., SLC-HIT...) in each of the higher stages (TLC and SLC).

6. Cache memory according to Claim 5, characterized in that
- depending on the formation of the subaddresses (e.g. AD14-23 or, respectively, AD16-25 or, respectively, AD17-27) for the memories of the individual stages (TLC, SLC, FLC), address bits (e.g. AD14-15 or, respectively, AD16) of the main memory address (MAD), not taken into consideration in the TAG entries of the preceding stages, in addition to the information (TA0 to TA2 or, respectively, SA0, SA1) on the bank, (TBK... or, respectively, SBK...) containing the same data block, of the higher stage (TLC or, respectively, SLC), in each case are provided as TAG entry in the control entry (T/F),
- additional comparison devices (VG1 or, respectively, VG2) for comparing the address bits (AD14-15 or, respectively, AD16) in each case derived from the main memory address (MAD) with the address bits contained in the control entry (T/F) are provided in the associated monitoring circuits (SLC - CTL, FLC-CTL) and
- the result lines of both comparison devices are connected to a logic gate for generating the final result signal of the respective monitoring circuit.

## Revendications

1. Procédé pour exécuter des demandes adressées à une mémoire cache à plusieurs niveaux d'une installation de traitement de données, les mémoires au niveau individuel étant subdivisées en banque et les blocs de données au niveau individuel pouvant être de dimensions différentes,
caractérisé en ce que
- hormis pour la mémoire du niveau (TLC) le plus haut pour la position (T/F) de contrôle, on utilise, comme position (TAG) dans les mémoires des niveaux (SLC, FLC) suivants plus bas, une indication (TA0 à TA2 ou SA0 et SA1) concernant la banque (TBK... ou SBK...) du niveau (TLC ou SLC) plus élevé contenant le bloc de données souhaité,
- en cas de demande directe de mémoire à la mémoire cache, on vérifie en même temps dans les mémoires de tous les niveaux (FLC, SLC et TLC) la présence du bloc de données souhaité et un accès couronné de succès au niveau (FLC) le plus bas n'est donné que si le bloc de données souhaité est présent et valable en même temps à tous les niveaux, et
- en cas de demande de mise à jour pour un bloc de données prescrit, on ne commande dans la mémoire cache d'abord que la mémoire du niveau (TLC) le plus haut et le bloc de données prescrit ou le bloc de données le contenant comme quantité partielle est déclaré non valable.

2. Procédé suivant la revendication 1,
caractérisé en ce que
en cas d'adresses partielles, formées à partir de bits (par exemple AD14-23 ou AD14-25) d'adresses successives de l'adresse (MAD) de mémoire principale, pour la commande des mémoires qui commencent par le même bit (AD14) d'adresses à au moins deux niveaux (par exemple TLC et SLC) successifs, on n'utilise, comme position TAG au niveau (SLC) inférieur, que l'indication (TA0 à TA2) concernant la banque (TBKx) de données du niveau (TLC) supérieur contenant le bloc de données souhaité.

3. Procédé suivant la revendication 1,
caractérisé en ce que,
en cas d'adresses partielles, formées de bits (par exemple AD14-23 et AD16-25) d'adresses successifs de l'adresse (MAD) de mémoire principale pour la commande des mémoires qui commencent par un autre bit (AD14 ou AD16) d'adresse à au moins deux niveaux (par exemple TLC et SLC) successifs, les adresses partielles pour le niveau inférieur commençant par un bit (AD16) d'adresses de plus faible poids, on utilise, comme position TAG au niveau (SLC) inférieur, outre les indications (TA0 à TA2) concernant la banque (TBKx) du niveau (TLC) supérieur contenant le bloc de données souhaité, en plus, aussi les bits (AD14-15) d'adresses de l'adresse (MAD) de mémoire principale se trouvant entre le dernier bit (par exemple AD13) d'adresses pris en compte comme position TAG à un niveau (par exemple TLC) et le bit (par exemple AD16) d'adresses initiales du niveau (SLC) immédiatement inférieur.

4. Procédé suivant la revendication 3,
caractérisé en ce que
le nombre des bits (par exemple AD14-23 ou AD16-25) d'adresses, pour les adresses partielles des mémoires de niveaux (par exemple TLC et SLC) successifs, dépend du rapport des dimensions de bloc associé et/ou des capacités de mémoire de banque associées de deux niveaux successifs, une dimension de bloc de données plus petite au niveau (SLC) inférieure entraînant une augmentation du nombre de bits d'adresses, tandis qu'une diminution de la capacité de mémoire de banque au niveau inférieur a un effet opposé.

5. Mémoire cache qui fonctionne conformément au procédé suivant l'une des revendications 1 à 4 et qui est subdivisée en plusieurs niveaux, les mémoires des niveaux (par exemple TCL, SLC et FLC) individuels étant subdivisées en banques (TBK..., SBK..., FBK...) et il est associé à chaque banque un circuit de surveillance qui, en cas d'accès, compare à une date de comparaison prescrite la position TAG dans une position (T/F) de contrôle associée à chaque position de donnée et fournit, lorsqu'il y a coïncidence, dans le cas d'une position de donnée valable, un signal d'atteinte comme signal (par exemple TLC-HITx) de résultat,
caractérisée en ce que,
- hormis pour le niveau (TLC) le plus élevé, la position TAG au niveau (SLC, FLC) inférieur peut être déduite du nombre caractéristique de banque de la banque du niveau (par exemple TLC ou SLC) immédiatement supérieur qui contient en mémoire le même bloc de données,
- à partir du niveau (TLC) le plus élevé, les lignes (TLC-HIT... ou SLC-HIT...) de résultat de tous les circuits (TLC-CTL ou SLC-CTL) de surveillance pour les banques (TBK... ou SBK...) associées d'un étage (TLC ou SLC) sont reliées en parallèle aux circuits (SLC-CTL ou FLC-CTL) de surveillance de toutes les banques (SBK... ou FBK...) au niveau (SLC ou FLC) immédiatement inférieur et il est prévu dans chaque circuit de surveillance des dispositifs de comparaison pour comparer l'indication (TA0 à TA2 ou SA1, SA2) de banque envoyée au niveau (TLC ou SLC) supérieur par l'intermédiaire des lignes (TLC-HIT... ou SLC-HIT...) de résultat aux indications de banque des positions (T/F) de contrôle lues au niveau (SLC ou FLC) inférieur, si bien qu'un signal (FLC-HIT...) d'atteinte n'est déclenché par les circuits (FLC-CTL) de surveillance du niveau (FLC) le plus bas que si un circuit de surveillance a produit un signal (TLC-HIT..., SLC-HIT...) d'atteinte à chacun des niveaux (TLC et SLC) supérieurs.

6. Mémoire cache suivant la revendication 5,
caractérisée en ce que,
- en fonction de la formation des adresses (par exemple AD14-23 ou AD16-25 ou AD17-27) partielles pour les mémoires des étages (TLC, SLC, FLC) individuels, il est prévu, comme position TAG à la position (T/F) de contrôle, outre les indications (TA0 à TA2 ou SA0, SA1) concernant la banque (TBK... ou SBK..) du niveau (TLC ou SLC) supérieur contenant le même bloc de données, des bits (par exemple AD14-15 ou AD16) d'adresses de l'adresse (MAD) de mémoire principale qui ne sont pas pris en compte dans les positions TAG des étages précédents,
- il est prévu, dans les circuits (SLC-CTL, FLC-CTL) de surveillance associés, des dispositifs (VG1 ou VG2) de comparaison supplémentaires pour comparer les bits (AD14-15 ou AD16) d'adresses dérivés de l'adresse (MAD) de mémoire principale aux bits d'adresses contenus dans la position (T/F) de contrôle, et
- les lignes de résultat des deux dispositifs de comparaison sont reliées à un élément de combinaison logique pour produire le signal de résultat définitif du circuit de surveillance associé.
